# DEMANDE DE BREVET EUROPEEN

(11) **EP 4 317 664 A1**
(43) Date de publication de la demande: **07.02.2024**
(21) Numéro de dépôt: 23186845.6
(22) Date de dépôt: 21.07.2023
(51) Int. Cl.: F02C 7/06, F01D 25/18, F02C 7/36, F16H 57/04

(54) **GOUTTIÈRE DE RÉCUPÉRATION D'HUILE POUR UN RÉDUCTEUR DE TURBOMACHINE**

(30) Priorité: 01.08.2022 FR 2207986
(71) Demandeur: Safran Transmission Systems, 92700 Colombes (FR)
(72) Inventeur: MARCOS IZQUIERDO, Juan-Luis, 77550 MOISSY-CRAMAYEL (FR)
(74) Mandataire: Gevers & Orès

(57) **Abrégé**

Gouttière (17) de récupération d'huile pour un réducteur de turbomachine, la gouttière (17) étant destinée à être disposée autour et en regard de moyens d'éjection d'huile formés dans une couronne du réducteur, la gouttière (17) s'étendant autour d'un axe et étant ouverte vers l'axe afin de récupérer l'huile éjectée, la gouttière (17) étant un anneau comportant une paroi de fond (18) délimitée par deux parois d'extrémité axiale (19) agencées axialement en regard ;
caractérisée en ce que la paroi de fond (18) de la gouttière (17) comprend plusieurs ouvertures (20) d'évacuation d'huile configurées chacune pour évacuer de l'huile récupérée par la gouttière (17), chaque ouverture (20) faisant saillie radialement vers l'extérieur de sorte à déboucher radialement à l'extérieur de la gouttière (17) et en présentant une orientation circonférentielle vis-à-vis de l'axe (X), les ouvertures (20) étant de préférence réparties de manière régulière autour de l'axe (X).

## Description

### Domaine technique de l'invention

La présente invention se rapporte à une gouttière de récupération d'huile pour un réducteur de turbomachine.

### Arrière-plan technique

Une turbomachine à double flux comprend classiquement une entrée d'air comportant une soufflante carénée dont le flux d'air en sortie se divise en un flux primaire qui pénètre dans une veine primaire du générateur de gaz et en un flux secondaire qui s'écoule dans une veine secondaire autour du générateur de gaz. Le générateur de gaz comprend classiquement d'amont en aval, dans le sens d'écoulement des gaz, au moins un compresseur, une chambre de combustion et au moins une turbine.

Dans le cas d'une turbomachine à réducteur, l'arbre de soufflante est entraîné par un arbre de turbine via un réducteur à train épicycloïdal. Le réducteur permet de réduire la vitesse de rotation de l'arbre de soufflante par rapport à celle de l'arbre de turbine. Le réducteur est classiquement placé dans une enceinte positionnée dans la partie amont de la turbomachine. Comme son nom l'indique, un réducteur à train épicycloïdal comprend un train épicycloïdal comportant au moins un solaire, une couronne, des satellites et un porte-satellite. En fonction des besoins, un tel réducteur à train épicycloïdal peut être configuré de différentes manières.

On s'intéressera plus particulièrement dans la suite de la demande à la configuration communément appelée « planétaire ». Plus précisément, dans une telle configuration, le réducteur présente un solaire solidaire de l'arbre de turbine, une couronne solidaire de l'arbre de soufflante et un porte-satellite fixe.

Les paliers et roues dentées du réducteur à train épicycloïdal sont abondamment lubrifiés avec de l'huile, pour notamment minimiser l'usure des surfaces de contact de ces différentes pièces, et ainsi maximiser le rendement et la durée de vie du réducteur.

L'huile est généralement injectée dans le réducteur via diverses buses, puis éjectée en périphérie de la couronne sous l'effet de la force centrifuge.

Il est connu des documents FR3084407A1 et FR3081513A1 au nom de la demanderesse d'implanter une gouttière de récupération d'huile autour de la couronne, de façon notamment à récupérer l'huile éjectée et ainsi faciliter son évacuation de l'enceinte. Les gouttières proposées dans les documents précités s'étendent de façon continue autour de la couronne et comprennent une unique sortie disposée classiquement à 6h par analogie au cadran d'une horloge.

Toutefois, les motoristes constatent que de telles gouttières sont perfectibles. En effet, les gouttières précitées sont engorgées d'huile, cet engorgement étant propice aux retours d'huile sur le réducteur, et notamment sur les pièces mobiles. De tels retours d'huile perturbent le comportement dynamique du réducteur, au détriment de son rendement. L'objectif de la présente invention est donc d'apporter une solution simple, efficace et économique permettant de répondre aux inconvénients précités.

### Résumé de l'invention

L'invention propose ainsi une gouttière de récupération d'huile pour un réducteur de turbomachine, la gouttière étant destinée à être disposée autour et en regard de moyens d'éjection d'huile formés dans une couronne du réducteur, la gouttière s'étendant autour d'un axe X et étant ouverte vers l'axe X afin de récupérer l'huile éjectée, la gouttière étant un anneau comportant une paroi de fond délimitée par deux parois d'extrémité axiale agencées axialement en regard ;
caractérisée en ce que la paroi de fond de la gouttière comprend plusieurs ouvertures d'évacuation d'huile configurées chacune pour évacuer de l'huile récupérée par la gouttière, chaque ouverture faisant saillie radialement vers l'extérieur de sorte à déboucher radialement à l'extérieur de la gouttière et en présentant une orientation circonférentielle vis-à-vis de l'axe X, les ouvertures étant de préférence réparties de manière régulière autour de l'axe X.

Les ouvertures permettent d'évacuer de l'huile récupérée par la gouttière de façon à désengorger la gouttière, et ainsi réduire significativement les retours d'huile sur le réducteur. La géométrie des ouvertures permet non seulement de maximiser la quantité d'huile évacuée mais également de minimiser les retours d'huile sur le réducteur, au bénéfice notamment du comportement dynamique du réducteur et de son rendement. Le fait d'avoir plusieurs ouvertures permet notamment d'évacuer davantage d'huile.

La gouttière selon l'invention peut comprendre une ou plusieurs des caractéristiques et/ou étapes suivantes, prises isolément les unes des autres ou en combinaison les unes avec les autres :
- au moins l'une des ouvertures présente une dimension radiale R1 vis-à-vis de l'axe X qui augmente de façon croissante depuis une extrémité circonférentielle interne de l'ouverture jusqu'à une extrémité circonférentielle externe de l'ouverture ;
- au moins l'une des ouvertures comprend une portion de fond délimitée par deux portions d'extrémité axiale, au moins l'une des ouvertures présentant en section radiale un profil courbe à concavité tournée vers l'axe X ;
- au moins l'une des ouvertures s'étend axialement sur toute la dimension axiale A1 de la paroi de fond ;
- au moins l'une des ouvertures présente globalement en section une forme rectangulaire ;
- au moins l'une des ouvertures se termine par une bouche d'évacuation qui est délimitée par un bord interne, un bord externe et des bords d'extrémité axiale, le bord interne et/ou le bord externe et/ou les bords d'extrémité axiale présentant un chanfrein, de manière à faciliter l'évacuation de l'huile ;
- la paroi de fond est réalisée d'un seul tenant.

L'invention concerne également un support pour un réducteur de turbomachine, le support étant destiné à supporter un porte-satellite du réducteur, le support comportant une gouttière telle que décrite précédemment.

Le support selon l'invention peut comprendre une ou plusieurs des caractéristiques et/ou étapes suivantes, prises isolément les unes des autres ou en combinaison les unes avec les autres :
- le support comporte des moyens de fixation amont à une enceinte de la turbomachine et des moyens de fixation aval au porte-satellite du réducteur, la gouttière étant disposée axialement entre les moyens de fixation amont et les moyens de fixation aval ;
- le support est monobloc.

L'invention concerne enfin une turbomachine comprenant une gouttière telle que décrite précédemment, ou un support tel que décrit précédemment.

### Brève description des figures

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
[Fig.1] la figure 1 est une vue partielle et schématique en demi-coupe axiale d'une turbomachine selon l'invention ;
[Fig.2] la figure 2 est une vue de détail de la figure 1 qui illustre un support selon l'invention ;
[Fig.3] la figure 3 est une vue en demi-coupe axiale d'une gouttière selon l'invention ;
[Fig.4] la figure 4 est une vue de face du support illustré sur les figures 1 et 2 ;
[Fig.5] la figure 5 est une vue de détail de la figure 4 ;
[Fig.6] la figure 6 est une vue de détail en coupe radiale de la figure 5 selon un plan passant par une ouverture.

### Description détaillée de l'invention

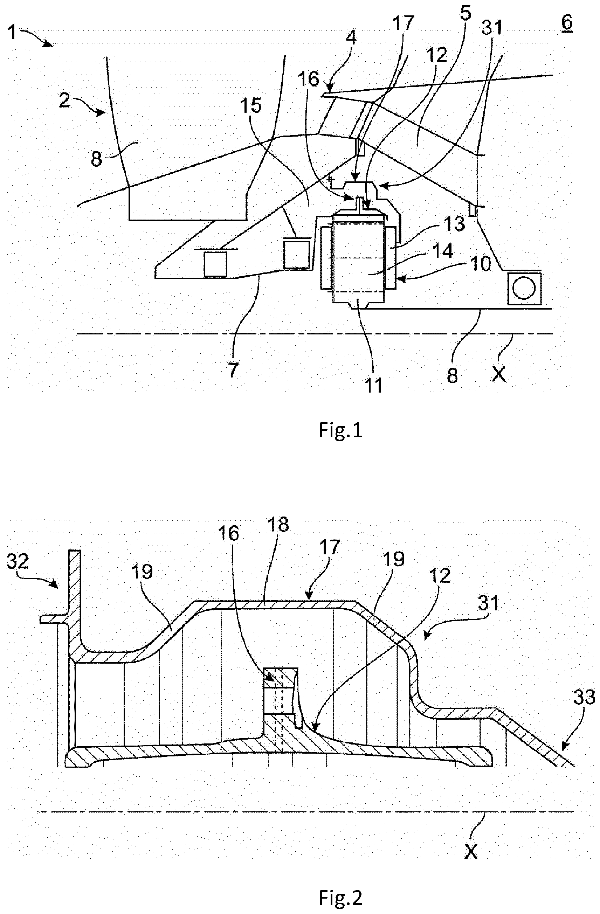

Sur la figure 1 est représentée partiellement une turbomachine 1 à réducteur, qui comprend classiquement d'amont en aval, dans le sens d'écoulement des gaz, une soufflante 2 carénée et un générateur de gaz comportant au moins un compresseur, une chambre de combustion, et au moins une turbine.

Tel qu'illustré sur la figure 1, le flux d'air généré par la soufflante 2 est divisé, par une structure fixe 4 de la turbomachine 1, en un flux primaire qui pénètre dans une veine primaire 5 du générateur de gaz et en un flux secondaire qui s'écoule dans une veine secondaire 6 autour du générateur de gaz, le flux secondaire participant de manière prépondérante à la poussée fournie par la turbomachine 1.

Tel qu'illustré sur la figure 1, la soufflante 2 comprend un arbre de soufflante 7 qui porte des pales 8 et qui est entraîné en rotation par un arbre de turbine 9 via un réducteur 10 à train épicycloïdal.

La turbomachine 1 est définie suivant un axe longitudinal X qui correspond notamment à l'axe de rotation des arbres de soufflante et de turbine 7, 9.

Tel qu'indiqué ci-dessus, le réducteur 10 à train épicycloïdal est ici de type « planétaire », et ci-après appelé réducteur 10. Le réducteur 10 permet de réduire la vitesse de rotation de l'arbre de soufflante 7 par rapport à celle de l'arbre de turbine 9.

Plus précisément, le réducteur 10 comprend un solaire 11 central solidaire de l'arbre de turbine 9 et une couronne 12 solidaire de l'arbre de soufflante 7, le solaire 11 et la couronne 12 étant mobiles autour de l'axe X. Le réducteur 10 comprend également un porte-satellite 13 fixe (ou immobile) qui porte plusieurs satellites 14 répartis autour de l'axe X, chaque satellite 14 étant engrené à la fois avec le solaire 11 et la couronne 12.

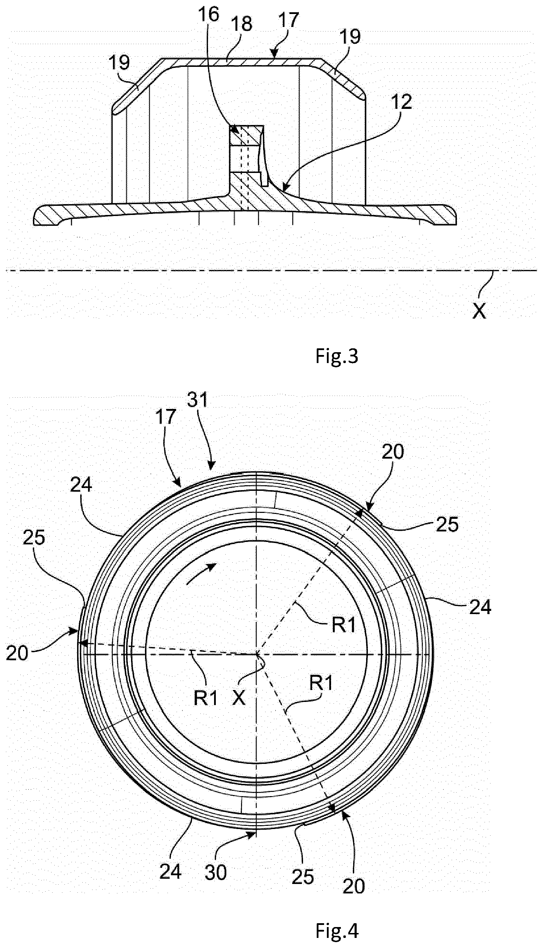

La couronne 12 peut être mobile en rotation autour de l'axe X selon un sens horaire ou antihoraire, en fonction notamment du sens de rotation de l'arbre de turbine 9. Tel qu'indiqué par la flèche sur la figure 4, dans les différents modes de réalisation illustrés sur les figures, la couronne 12 est ici mobile en rotation autour de l'axe X selon un sens de rotation horaire.

Tel qu'illustré sur la figure 1, le réducteur 10 est logé et lubrifié dans une enceinte 15 annulaire autour de l'axe X, l'enceinte 15 étant positionnée dans la partie amont de la turbomachine 1.

Le réducteur 10 est lubrifié via une ou plusieurs buses qui injectent de l'huile à l'intérieur du réducteur 10. L'huile injectée est centrifugée vers l'extérieur de manière à suivre un chemin prédéterminé, puis éjectée du réducteur 10 via des moyens d'éjection d'huile 16 formés dans la couronne 12. Les moyens d'éjection d'huile 16 se présentent par exemple sous la forme d'orifices radiaux formés dans la couronne 12.

Une gouttière 17 de récupération d'huile est disposée autour et en regard des moyens d'éjection d'huile 16 de la couronne 12, afin de récupérer l'huile et faciliter son évacuation en dehors de l'enceinte 15. La gouttière 17 s'étend autour de l'axe X et est ouverte vers l'axe X. La gouttière 17 est un anneau qui comporte une paroi de fond 18 délimitée par deux parois d'extrémité axiale 19 agencées axialement en regard.

Selon l'invention, la paroi de fond 18 de la gouttière 17 comprend plusieurs ouvertures 20 d'évacuation d'huile configurées chacune pour évacuer de l'huile récupérée par la gouttière 17. Chaque ouverture 20 fait saillie radialement vers l'extérieur de sorte à déboucher radialement à l'extérieur de la gouttière 17 et en présentant une orientation circonférentielle vis-à-vis de l'axe X. Les ouvertures 20 sont de préférence répartis de manière régulière autour de l'axe X.

Les ouvertures 20 permettent d'évacuer une partie de l'huile récupérée par la gouttière de façon à désengorger la gouttière, et ainsi réduire significativement les retours d'huile sur le réducteur. La géométrie des ouvertures 20 permet non seulement de maximiser la quantité d'huile évacuée mais également de minimiser les retours d'huile sur le réducteur, au bénéfice notamment du comportement dynamique du réducteur et de son rendement. Le fait d'avoir plusieurs ouvertures permet notamment d'évacuer davantage d'huile.

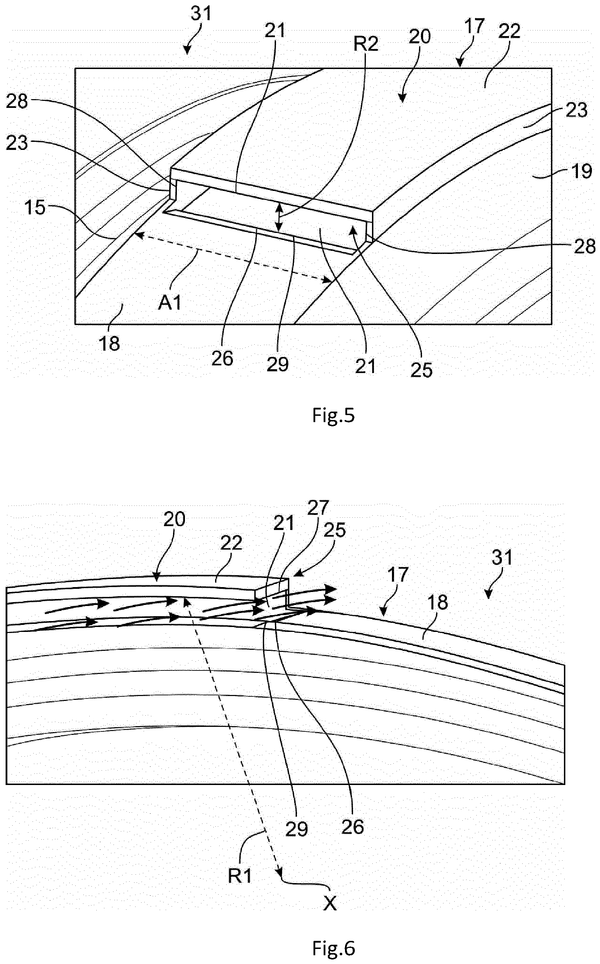

La gouttière 17 de récupération d'huile est également définie suivant l'axe X. Tel qu'indiqué ci-dessus, une ouverture 20 débouche à l'extérieur de la gouttière en présentant une orientation circonférentielle vis-à-vis de l'axe X, de manière à évacuer l'huile suivant une orientation circonférentielle (figure 6), et ainsi faciliter son évacuation.

Par convention dans la présente demande, les dimensions radiales (ou rayons) explicitées dans cette demande ont pour référence l'axe X de la gouttière 17 ou de la turbomachine 1.

En outre, par convention dans la présente demande, on entend par « axial » ou « axialement » toute direction parallèle à l'axe X de la gouttière 17 ou de la turbomachine 1, par « radial » ou « radialement » toute direction perpendiculaire à l'axe X de la gouttière 17 ou de la turbomachine 1, et par « circonférence » ou « circonférentiellement » toute direction relative à la circonférence de la gouttière 17 ou de la turbomachine 1 (par opposition aux directions axiale et radiale explicitées ci-dessus).

De plus, par convention dans la présente demande, les termes « interne » et « externe » sont définis radialement par rapport à l'axe X de la gouttière 17 ou de la turbomachine 1.

Enfin, par convention dans la présente demande, les termes « amont » et « aval » font référence à la direction générale d'écoulement des gaz à travers la turbomachine en fonctionnement.

Avantageusement, la gouttière 17 est fixe, et est fixée directement ou indirectement à la structure fixe 4 de la turbomachine 1, et plus précisément à l'enceinte 15.

Le dimensionnement et la géométrie d'une ouverture 20 dépendent notamment de la quantité d'huile à évacuer et de l'encombrement radial disponible dans l'enceinte 15. Les ouvertures 20 peuvent présenter des caractéristiques dimensionnelles et géométriques identiques ou distinctes, selon les besoins.

Une ouverture 20 peut comprendre une portion de fond 22 bordée par deux portions d'extrémité axiale 23. L'ouverture 20 ou la portion de fond 22 peut présenter en section radiale (section suivant un plan perpendiculaire à l'axe X) un profil droit ou un profil courbe à concavité tournée vers l'axe X.

Une ouverture 20 se termine par une bouche 21 d'évacuation, suivant le sens d'écoulement de l'huile dans l'ouverture 20.

Avantageusement, une ouverture 20 présente une dimension radiale R1 vis-à-vis de l'axe X qui augmente de façon croissante depuis une extrémité circonférentielle interne 24 de l'ouverture 20 jusqu'à une extrémité circonférentielle externe 25 de l'ouverture 20. La dimension radiale R1 de l'ouverture 20 augmente suivant le sens de rotation de la couronne 12. A titre d'exemple, lorsque la couronne 12 est mobile selon un sens de rotation horaire, la dimension radiale R1 de l'ouverture 20 augmente selon le sens horaire.

Un tel dimensionnement de l'ouverture 20 permet d'acheminer l'huile progressivement en direction de la bouche 21, de façon notamment à minimiser les turbulences et par conséquent les retours d'huile. Avantageusement, la bouche 21 d'une ouverture 20 est disposée au niveau de son extrémité circonférentielle externe 25.

Avantageusement, une ouverture 20 s'étend axialement sur toute la dimension axiale A1 de la paroi de fond 18, de manière à réduire l'encombrement radial de l'ouverture 20.

Avantageusement, une ouverture 20 présente globalement en section une forme rectangulaire.

Avantageusement, la dimension radiale R2 d'une bouche 21 est supérieure à 2mm.

La bouche 21 d'une ouverture 20 peut être définie par un bord interne 26, un bord externe 27 et des bords d'extrémité axiale 28.

Avantageusement, le bord interne 26 et/ou le bord externe 27 et/ou les bords d'extrémité axiale 28 d'une bouche 21 présentent un chanfrein 29, de manière à faciliter l'évacuation de l'huile.

Une paroi de fond 18 peut être réalisée d'un seul tenant.

Avantageusement, la gouttière 17 comprend une sortie principale 30 d'huile qui est de préférence disposée à 6h par analogie au cadran d'une horloge, en accord avec l'action de la gravité. La sortie principale 30 d'huile permet d'évacuer l'huile restante (huile non évacuée par les ouvertures 20).

L'huile évacuée de la gouttière 17 (via les ouvertures 20, et éventuellement via la sortie principale 30) converge plus ou moins rapidement vers un point d'aspiration à partir duquel l'huile est aspirée en dehors de l'enceinte 15, par l'intermédiaire d'une pompe. Le point d'aspiration est de préférence disposé à 6h par analogie au cadran d'une horloge.

La gouttière 17 peut être seule ou indépendante (figure 3). La gouttière 17 est alors fixée directement ou indirectement à la structure fixe 4, et plus précisément à l'enceinte 15.

Avantageusement, la gouttière 17 est monobloc.

La gouttière 17 peut être intégrée ou faire partie d'une autre pièce telle qu'un support 31 (figures 1, 2 et 4 à6). Le support 31 est par exemple destiné à supporter le porte-satellite 13 du réducteur 10 et comporte une gouttière 17 telle que décrite précédemment.

Le support 31 peut comporter des moyens de fixation amont 32 à l'enceinte 15 et des moyens de fixation aval 33 au porte-satellite 13, la gouttière 17 étant disposée axialement entre les moyens de fixation amont 32 et les moyens de fixation aval 33.

Avantageusement, le support 31 est monobloc.

Selon le mode de réalisation illustré sur les figures 1, 2 et 4 à 6, la gouttière 17 fait ici partie d'un support 31 qui est utilisé pour supporter le porte-satellite 13 du réducteur 10. Le support 31 comprend des moyens de fixation amont 32 à l'enceinte 15 qui comportent ici une bride épaulée et des moyens de fixation aval 33 au porte-satellite 13 qui comportent ici une bride. La gouttière 17 est disposée axialement entre les deux brides et autour des moyens d'éjection d'huile 16 de la couronne 12, afin de récupérer l'huile éjectée. La gouttière 17 est élastiquement déformable et confère ainsi une certaine flexibilité au support 31 (et par voie conséquence au porte-satellite 13), le support 31 étant à ce titre communément appelé « support flexible ».

La gouttière 17 est annulaire autour de l'axe X et présente en section un profil en U dont l'ouverture est orientée vers l'axe X. Plus précisément, la gouttière 17 comprend une paroi axiale de fond 18 bordée par deux parois d'extrémité axiale 19. Les deux parois d'extrémité axiale 19 sont agencées axialement en regard et s'évasent depuis la paroi de fond 18.

Tel qu'illustré sur la figure 4, la gouttière 17 comprend trois ouvertures 20 réparties de manière régulière autour de l'axe X. Chacune des ouvertures 20 présente un angle au centre d'environ 90°. Les ouvertures 20 présentent ici des caractéristiques dimensionnelles et géométriques identiques. Chaque ouverture 20 s'étend circonférentiellement autour de l'axe X depuis une extrémité circonférentielle interne 24 jusqu'à une extrémité circonférentielle externe 25. Chaque ouverture 20 présente globalement en section une forme rectangulaire. Plus précisément, chaque ouverture 20 comprend une portion de fond 22 courbe à concavité tournée vers l'axe X qui est bordée par deux portions d'extrémité axiale 23, chaque portion d'extrémité axiale 23 reliant la portion de fond 22 à une base de la paroi de fond 18. La portion de fond 22 présente une dimension radiale R1 vis-à-vis de l'axe X qui augmente de façon croissante suivant un sens horaire depuis l'extrémité circonférentielle interne 24 jusqu'à l'extrémité circonférentielle externe 25.

La bouche 21 de chaque ouverture 20 est disposée au niveau de son extrémité circonférentielle externe 25.

Tel qu'illustré sur les figures 5 et 6, la bouche 21 de chaque ouverture 20 présente un profil rectangulaire. La bouche 21 est ainsi définie par un bord interne 26, un bord externe 27 et des bords d'extrémité axiale 28. Seul le bord interne 26 de la bouche 21 présente un chanfrein 29, de manière à faciliter l'évacuation de l'huile. Chaque ouverture 20 et sa bouche 21 associée s'étendent axialement sur toute la dimension axiale A1 de la paroi de fond 18. La bouche 21 présente une dimension radiale R2 qui est supérieure à 2mm.

Tel qu'illustré sur la figure 6, l'huile symbolisée par des flèches s'évacue circonférentiellement ou tangentiellement au travers de la bouche 21.

En complément des ouvertures 20, la gouttière 17 comprend une sortie principale 30 qui est disposée à 6h par analogie au cadran d'une horloge, afin d'évacuer l'huile restante à l'extérieur de la gouttière 17.

La paroi de fond 18 est formée d'un seul tenant et le support 31 est monobloc.

Selon le mode de réalisation illustré sur la figure 3, la gouttière 17 est ici seule ou indépendante. Les caractéristiques associées à la gouttière 17 qui ont été décrites ci-dessus en lien avec le mode de réalisation des figures 1, 2, 4 à 6 sont valables pour ce mode de réalisation.

## Revendications

1. Gouttière (17) de récupération d'huile pour un réducteur (10) de turbomachine (1), la gouttière (17) étant destinée à être disposée autour et en regard de moyens d'éjection d'huile (16) formés dans une couronne (12) du réducteur (10), la gouttière (17) s'étendant autour d'un axe (X) et étant ouverte vers l'axe (X) afin de récupérer l'huile éjectée, la gouttière (17) étant un anneau comportant une paroi de fond (18) délimitée par deux parois d'extrémité axiale (19) agencées axialement en regard ;
**caractérisée en ce que** la paroi de fond (18) de la gouttière (17) comprend plusieurs ouvertures (20) d'évacuation d'huile configurées chacune pour évacuer de l'huile récupérée par la gouttière (17), chaque ouverture (20) faisant saillie radialement vers l'extérieur de sorte à déboucher radialement à l'extérieur de la gouttière (17) et en présentant une orientation circonférentielle vis-à-vis de l'axe (X), les ouvertures (20) étant de préférence réparties de manière régulière autour de l'axe (X).

2. Gouttière (17) selon la revendication 1, **caractérisée en ce qu'**au moins l'une des ouvertures (20) présente une dimension radiale (R1) vis-à-vis de l'axe (X) qui augmente de façon croissante depuis une extrémité circonférentielle interne (24) de l'ouverture (20) jusqu'à une extrémité circonférentielle externe (25) de l'ouverture (20).

3. Gouttière (17) selon l'une des revendications précédentes, **caractérisée en ce qu'**au moins l'une des ouvertures (20) comprend une portion de fond (22) délimitée par deux portions d'extrémité axiale (23), au moins l'une des ouvertures (20) présentant en section radiale un profil courbe à concavité tournée vers l'axe (X).

4. Gouttière (17) selon l'une des revendications précédentes, **caractérisée en ce qu'**au moins l'une des ouvertures (20) s'étend axialement sur toute la dimension axiale (A1) de la paroi de fond (18).

5. Gouttière (17) selon l'une des revendications précédentes, **caractérisée en ce qu'**au moins l'une des ouvertures (20) présente globalement en section une forme rectangulaire.

6. Gouttière (17) selon l'une des revendications précédentes, **caractérisée en ce qu'**au moins l'une des ouvertures (20) se termine par une bouche (21) d'évacuation qui est délimitée par un bord interne (26), un bord externe (27) et des bords d'extrémité axiale (28), le bord interne (26) et/ou le bord externe (27) et/ou les bords d'extrémité axiale (28) présentant un chanfrein (29), de manière à faciliter l'évacuation de l'huile.

7. Gouttière (17) selon l'une des revendications précédentes, **caractérisée en ce que** la paroi de fond (18) est réalisée d'un seul tenant.

8. Support (31) pour un réducteur (10) de turbomachine (1), le support (31) étant destiné à supporter un porte-satellite (13) du réducteur (10), le support (31) comportant une gouttière (17) selon l'une des revendications précédentes.

9. Support (31) selon la revendication précédente, **caractérisé en ce que** le support (31) comporte des moyens de fixation amont (32) à une enceinte (15) de la turbomachine (1) et des moyens de fixation aval (33) au porte-satellite (13) du réducteur (10), la gouttière (17) étant disposée axialement entre les moyens de fixation amont (32) et les moyens de fixation aval (33).

10. Support (31) selon l'une des revendications 8 ou 9, **caractérisé en ce que** le support (31) est monobloc.

11. Turbomachine (1) comprenant une gouttière (17) selon l'une des revendications 1 à 7, ou un support (31) selon l'une des revendications 8 à 10.
